# EUROPEAN PATENT SPECIFICATION

(11) **EP 2 518 593 B1**
(45) Date of publication and mention of the grant of the patent: **29.05.2013**
(21) Application number: 11164232.8
(22) Date of filing: 29.04.2011
(51) Int. Cl.: G06F 3/02, G06F 1/16

(54) **Keypad having a curved shape**
Tastatur mit einer gebogenen Form
Clavier doté d'une forme incurvée

(43) Date of publication of application: 31.10.2012
(73) Proprietor: Research In Motion Limited, Waterloo, ON N2L 3W8 (CA)
(72) Inventor: Chen, Chao, Waterloo Ontario N2L 3L3 (CA); Huang, Li, Waterloo Ontario N2L 3L3 (CA)
(74) Representative: Fennell, Gareth Charles

(56) References cited:
- JP-A- 2001 296 955
- US-A1- 2004 001 735
- US-A1- 2007 012 153
- US-A1- 2009 107 816
- US-A1- 2011 094 868
- US-B1- 6 802 662
- ANONYMOUS: "Curved Keyboard. December 1977.", IBM TECHNICAL DISCLOSURE BULLETIN, vol. 20, no. 7, 1 December 1977 (1977-12-01), pages 2784-2785, XP000002658271, New York, US

## Description

### Field

This disclosure relates generally to keypads for use with handheld electronic devices and, more particularly, to a keypad with a curved shape.

### Background Information

Numerous types of handheld electronic devices are known. Examples of such handheld electronic devices include, for instance, personal data assistants (PDAs), handheld computers, two-way pagers, mobile telephones, and the like. Some handheld electronic devices feature wireless communication capabilities. Other handheld electronic devices are stand-alone devices that are functional without communication with other devices.

Handheld electronic devices are generally intended to be portable, and thus are of a relatively compact configuration. A typical handheld electronic device has a keypad, which is disposed and supported on or within a housing. The keypad can have various shapes and designs. For example, the keypad can have a curved shape so that the keys are easily actuatable by a user of the handheld electronic device.

In conventional handheld electronic devices employing a dome switch key configuration, the bottom surfaces of key members are parallel to a printed circuit board (PCB) so that the bottom portions of the actuators are perpendicular to respective axes of the tops of domes. Keypads having a curved-shaped top profile typically have key members that are molded so that the thickness of each key member decreases significantly from a laterally inward edge of the key member to a laterally outer edge of the key member. Additionally the key members are arranged so that the thickness of the laterally outer edge of each of the key members decreases between a center of the device housing and an edge of the device housing. This can be problematic because the thin laterally outer edge of the key members can be susceptible to damage. Additionally, the thin laterally outer edge of some of the key members can cause molding issues. More particularly, the thickness of some of the key members can be below the minimum molding thickness.

US 2011/094868 details a key assembly for use in an electronic device. The key assembly comprises a plurality of dome switches and one or more single-piece keycaps. Each keycap has a plurality of key portions separated by deforming portions. The key assembly further comprises a plurality of actuators for activating the dome switches. Each actuator has a stem portion and an enlarged rigid blocking portion. The key assembly also comprises one or more rigid blocking members disposed between the blocking portion of the actuators and the keycaps and in close proximity to the blocking portion of the actuators. The blocking members form a barrier to limit a rotational movement of the actuators away from the dome switches.

US 2007/012153 details a key structure that comprises a substrate, a first rod, a second rod, and a key cover. The substrate comprises a first surface, a through hole, and a plurality of contact portions fixed to the first surface. Each of the contact portions has a contact surface partially covering the through hole. The first rod comprises a first primary pivot accommodated in the through hole and slidable on one of the contact surfaces, and a first auxiliary pivot slidable on the first surface. The second rod is movably connected to the first rod, comprising a second primary pivot accommodated in the through hole and a second auxiliary pivot abutting the first surface. The key cover is movable with respect to the substrate and connected to the first and second rods.

IBM technical disclosure bulletin "Curved Keyboard", vol. 20 No. 7, pages 2784-2785 details a keyboard curved keytop orientation. By that approach, the key buttons may all be of the same cross section and slant.

US 2004/001735 details a keyboard that includes an upper casing and a base. The upper casing having a first curved surface includes an area for accommodating a plurality of key switches. The base has a second curved surface, which corresponds to the first curved surface of the upper casing. The base includes a plurality of connection elements for connecting the key switches. Each of the key switches includes a scissors-like structure.

Aspects and features of the present invention are set out in the appended claims.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:

Fig. 1 is a front perspective view of a handheld electronic device having an example of a keypad, consistent with disclosed embodiments;

Fig. 2 is a block diagram of the handheld electronic device of Fig. 1, consistent with disclosed embodiments;

Fig. 3 is a bottom end view of the handheld electronic device of Fig. 1, consistent with disclosed embodiments;

Fig. 4 is an exploded view of a row of the keypad of Fig. 1, consistent with disclosed embodiments;

Fig. 5 is a section view of the assembled keypad row in the housing of Fig. 1, consistent with disclosed embodiments; and

Fig. 6 is a partial view of the assembled keypad row of Fig. 5, consistent with disclosed embodiments.

### DETAILED DESCRIPTION

Reference will now be made in detail to exemplary embodiments, examples of which are illustrated throughout the drawings. Wherever possible, the same reference numbers are used in the drawings and the description to refer to the same or like parts.

The disclosure generally relates to a handheld electronic device. Examples of handheld electronic devices include mobile wireless communication devices such as pagers, mobile phones, mobile smart-phones, wireless organizers, personal digital assistants, wireless-enabled notebook computers, and any other known communication device having a keypad.

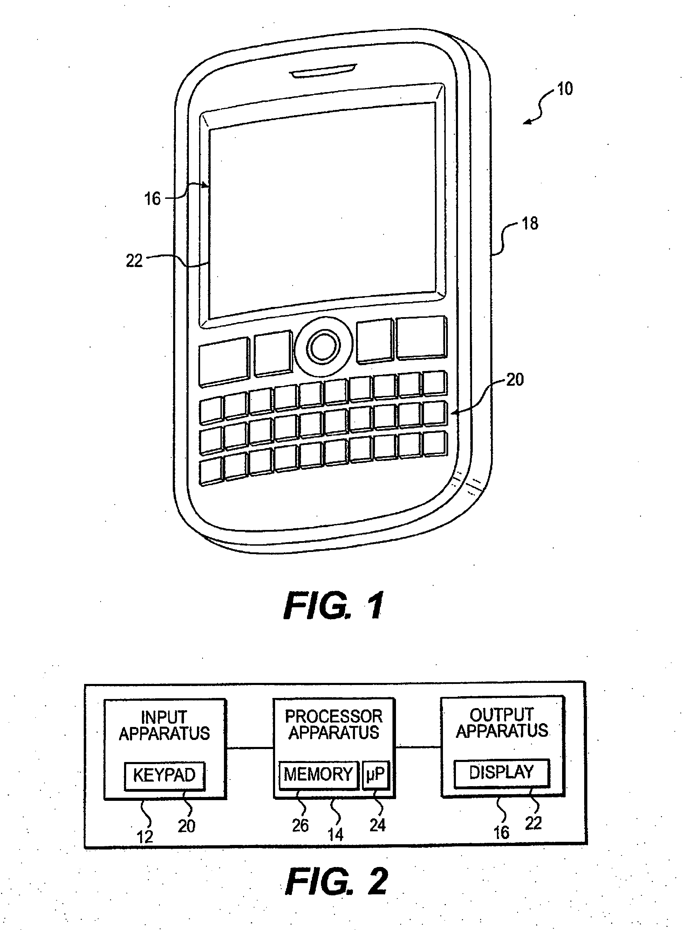

An exemplary handheld electronic device 10 is illustrated generally in Fig. 1 and is depicted schematically in Fig. 2. Handheld electronic device 10 includes an input apparatus 12, an output apparatus 16, and a processor apparatus 14, all of which are disposed and supported by a housing 18. The input apparatus 12 includes a keypad 20. Keypad 20 can be a numeric keypad, an alphabetic keypad, an alphanumeric keypad, a QWERTY keypad, or any other keypad configuration incorporating one of these layouts or portions thereof. Input apparatus 12 can additionally include a track ball or optical trackpad, as well as other known input members. The output apparatus 16 includes a display 22, which can be a non-touch or a touchscreen display. Output apparatus 16 can additionally include, for instance, one or more visual outputs such as lights and one or more audible outputs such as a speaker, as well as other output devices. The processor apparatus 14 includes a processor 24, such as a microprocessor (µP) or other processor. Processor apparatus 14 further includes a memory 26. Memory 26 can be any one or more of a variety of types of internal or external storage media such as, without limitation, RAM, ROM, EPROM(s), EEPROM(s), and the like that provide a storage register for data storage such as in the fashion of an internal storage area of a computer, and can be volatile memory or nonvolatile memory. As a general matter, memory 26 has stored therein a number of routines that are executable on processor 24. The processor apparatus 14 receives input signals from the input apparatus 12 and processes output signals sent to the output apparatus 16.

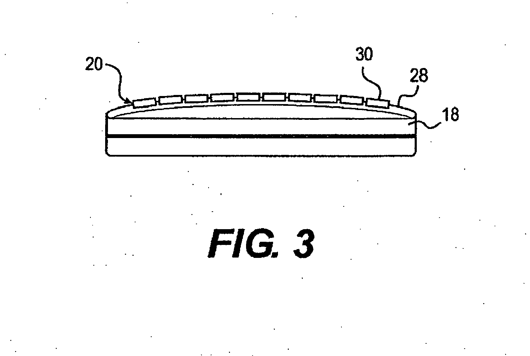

Housing 18, which can be fabricated from plastic, metal, or the like, can be molded to have one or more curved surfaces. In particular, housing 18 can be made with one or more curved surfaces to better fit the user's hand, and create a distinctive and identifiable shape. Fig. 3 is a bottom end view of handheld electronic device 10 shown in Fig. 1. In the illustrated embodiment, a front face 28 of housing 18 is substantially convex. Keypad 20 is shaped to match the shape of front face 28 of housing 18. In an exemplary embodiment, keypad 20 has a generally convex shape. In this manner, key caps 30 of keypad 20 are easily actuable by a user of handheld electronic device 10. Although Fig. 1 illustrates that keypad 20 has key caps 30 arranged in rows that extend substantially parallel to the top and bottom of housing 18, it should be understood that, in some embodiments, rows of key caps may extend substantially perpendicular to the top and bottom of housing 18.

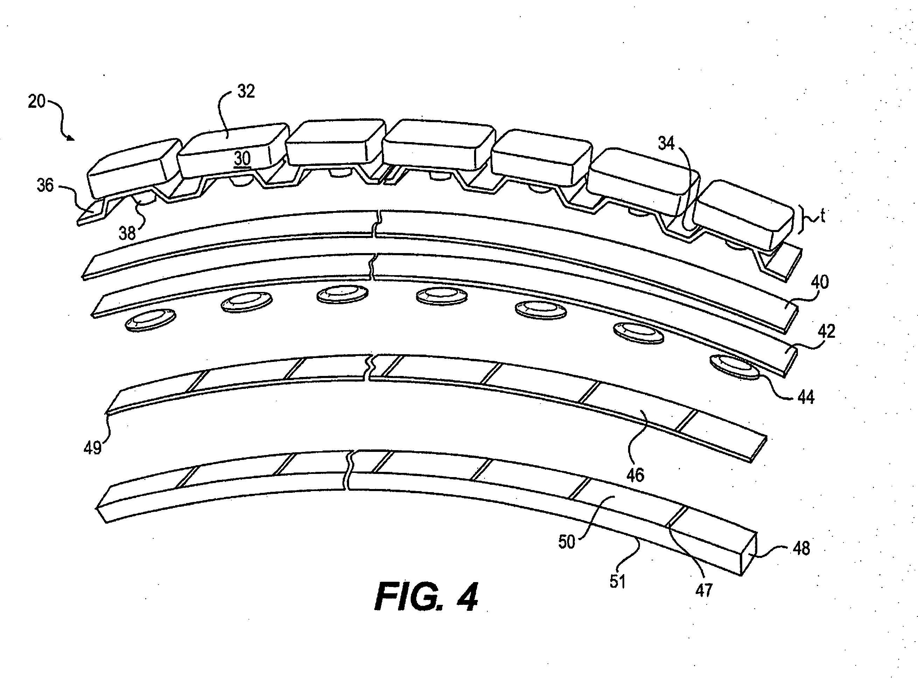

Fig. 4 is an exploded view of a cross-section of a row of keypad 20. Keypad 20 is an assembly of multiple components including key caps 30, a sheet 36, a light guide 40, a dome sheet 42, a plurality of domes 44, a flexible printed circuit board (FPCB) 49, and a dome support 48. Although Fig. 4 illustrates that each of sheet 36, light guide 40, dome sheet 42, FPCB 49, and dome support 48 corresponds with a single row of key caps 30 of keypad 20, it should be understood that each of sheet 36, light guide 40, dome sheet 42, FPCB 49, and dome support 48 is associated with all of the key caps 30 of keypad 20. In some embodiments, however, multiple dome supports may be provided with a separate dome support corresponding with each row or column of domes 44 and key caps 30.

As illustrated in Fig. 4, keypad 14 has a plurality of individual key caps 30. Key caps 30 are comprised of a relatively rigid material, such as hard resin or another relatively rigid material. In some embodiments, key caps 30 are comprised of a polycarbonate type hard resin.

Key caps 30 can each have substantially the same thickness and size. In the embodiment shown in the drawings, each of the key caps 30 has a thickness ("t") that is substantially uniform in a plane that extends substantially perpendicular to front face 28 of housing 18. In addition, each of the key caps 30 has substantially the same thickness along its entire extent (e.g., in multiple planes substantially perpendicular to front face 28 of housing 18 and substantially parallel to the top and bottom of housing 18, and in multiple planes substantially perpendicular to the front face 28 and substantially perpendicular to the top and bottom of housing 18), although some variation is possible. The uniformity does not limit the key caps from having an ergonomic top profile (a profile added on top of the key caps) for easy operation by the user of handheld electronic device 10. Key caps 30 can also have sizes that have some variations. In the exemplary embodiment shown in the drawings, each of key caps 30 has an outer perimeter defining a shape that is substantially rectangular in a plane parallel to front face 28 of housing 18 and perpendicular to a thickness direction of each key cap 30. It is contemplated that each key cap 30 can have an outer perimeter defining a shape that is substantially square, substantially circular, substantially oval, or any other shape in a plane parallel to front face 28 of housing 18 and perpendicular to a thickness direction of each key cap 30.

Key caps 30 each include a top engagement surface 32 engageable by a user of handheld electronic device 10. In the depicted embodiment, engagement surface 32 is planar; however, it is to be understood that engagement surface 32 can have any shape or configuration that provides good tactile feel to the user of handheld electronic device 10. It is contemplated that one or more objects may appear on engagement surfaces 32 of key caps 30. The objects include, for example and without limitation, characters, letters, strokes, ideograms, digits, and the like.

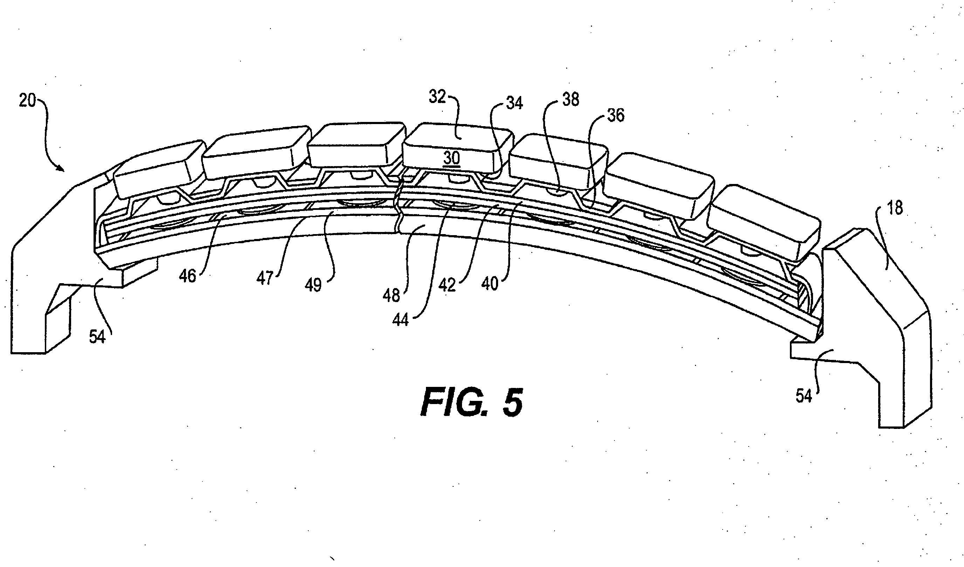

Key caps 30 each include a bottom surface 34 opposite engagement surface 32. Fig. 4 illustrates the bottom surface 34 as being planar, but other shapes are possible. Each bottom surface 34 is aligned with a respective one of a plurality of actuators 38 and a respective one of the plurality of domes 44. In an assembled keypad 20, bottom surfaces 34 of the key caps 30, along a row of key caps 30, define a generally convex curved shape, as shown in Figs. 4 and 5. Along a row of key caps 30, engagement surfaces 32 of key caps 30 define a generally convex curved shape in the embodiment shown in Figs. 4 and 5, which has planar engagement surfaces 32.

Sheet 36, which may be a key mat, is positioned under key caps 30. Sheet 36 can be provided either as a separate sheet or integrated with bottom surfaces 34 of key caps 30. Sheet 36 includes the plurality of actuators 38 having an arrangement that corresponds to the arrangement of key caps 30. Sheet 36 and actuators 38 can be formed of a relatively flexible and elastic material, such as thermoplastic elastomeric material or another relatively flexible and elastic material.

Each actuator 38 is aligned with a respective one of the plurality of key caps 30 and is directed away from a bottom surface 34 of the respective one of the plurality of key caps 30 towards a respective one of the plurality of domes 44. Depressing or pushing engagement surface 32 of one of the key caps 30 causes inward movement of a corresponding actuator 38 towards a corresponding dome 44.

Light guide 40 is positioned under sheet 36. Light guide 40 is configured to transmit light from one or more light sources, e.g., one or more LEDs (not shown) to key caps 30 to provide illumination of the key caps.

Domes 44 are aligned with actuators 38. Each dome 44 is generally a thin, compressible, electric contact formed of a metal alloy. Domes 44 are held in place by a dome sheet 42 having an adhesive on a side facing the domes 44. The number of domes 44 is preferably equal to the number of key caps 30, such that each key cap 30 is associated with a single dome 44.

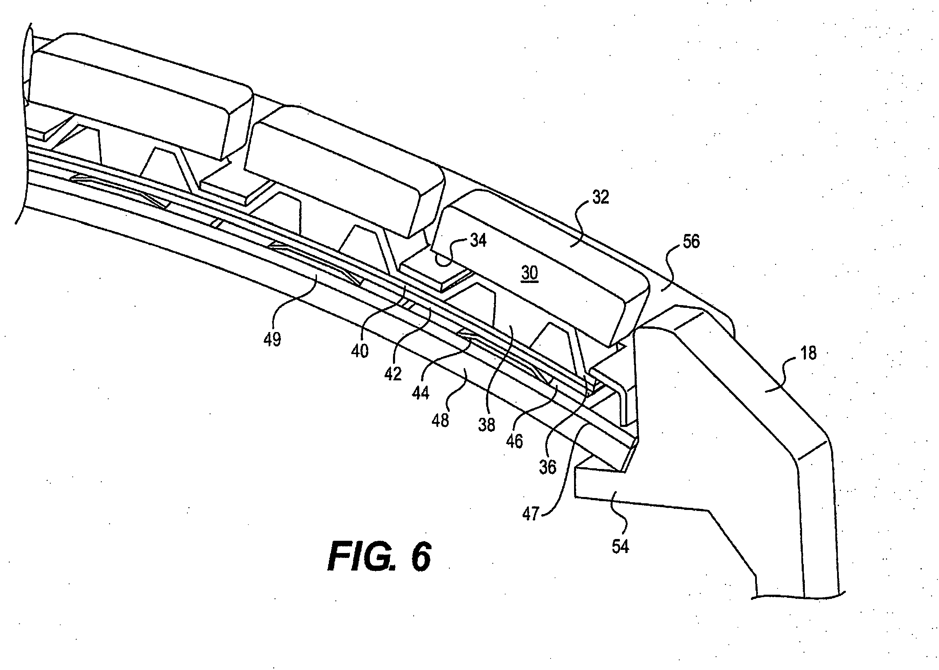

Dome support 48 is positioned under domes 44. Dome support 48 has a generally curved top surface 47 and a generally curved bottom surface 51. The generally curved top surface 47 includes a plurality of substantially flat surface portions 50. FPCB 49 is attached to top surface 47 of dome support 48 by an adhesive or bonding agent and conforms to top surface 47 of dome support 48, as shown in Figs. 5 and 6. After FPCB 49 is adhered to top surface 47, FPCB 49 has a plurality of substantially flat surface portions 46 that are associated with (e.g., substantially aligned with) substantially flat surface portions 50 of dome support 48. Substantially flat surface portions 46 of FPCB 49 and substantially flat surface portions 50 of dome support 48 are substantially flat relative to the generally curved bottom surface 51 of dome support 48. Each dome 44 is attached to a respective one of the plurality of substantially flat surface portions 46 of FPCB 49. When a key cap 30 is depressed, an actuator 38 associated with the depressed key cap is moved downward and a bottom portion of the actuator 38 applies a force to the top of the respective dome 44 through light guide 40 and dome sheet 42. Compression of dome 44 against dome support 48 causes dome 44 to close a circuit of handheld electronic device 10 to provide an input to the processor apparatus 14.

As illustrated in Figs. 5 and 6, dome support 48 has a generally curved shape in a plane that is substantially perpendicular to front face 28 of housing 18. In an exemplary embodiment, dome support 48 defines a generally convex shape. Each dome 44 is disposed on a respective one of the plurality of substantially flat surface portions 46 of FPCB 49, which is attached to dome support 48. Each dome 44 is aligned with a respective one of the plurality of key caps 30, so that a respective actuator 38 associated with the key cap 30 is above dome 44. Bottom surfaces 34 of key caps 30 are substantially parallel to substantially flat surface portions 46 of FPCB 49. Bottom surfaces 34 of key caps 30 are thus arranged to form a generally curved shape that matches the generally curved shape of dome support 48. Light guide 40 and dome sheet 42 are located between key caps 30 and dome support 48 and are configured to conform to the shape of dome support 48, when keypad 20 is in an assembled state. Front face 28 of housing 18 includes arched support structures 54 that hold keypad 20 so that keypad 20 matches the profile of housing 18. As illustrated in Figs. 5 and 6, arched support structures 54 are part of housing 18 in a unitary housing structure. It is contemplated, however, that arched support structures 54 may be separate pieces that are received and retained in housing 18.

In some embodiments, keypad 20 may further include a metal sheet 56 (Fig. 6) configured to provide structural support to keypad 20. In some embodiments, metal sheet 56 overlays sheet 36 and defines a plurality of holes that receive key caps 30. Metal sheet 56 compresses sheet 36, light guide 40, and dome sheet 42 against dome support 48. Metal sheet 56 can be coupled to housing to secure keypad 20 to housing 18. In some embodiments, metal sheet 56 may snap into housing 18.

Assembly of the disclosed dome support 48, FPCB 49, plurality of domes 44, dome sheet 42, sheet 36, and key caps 30 provide a keypad 20 having a curved shape so that key caps 30 are easily actuatable by the user. Since bottom surfaces 34 of key caps 30 are arranged to match the generally curved shape of dome support 48, key caps 30 can be formed (e.g., molded) in any shape and configuration that is resistant to damage by wear associated with continued use. Key caps 30 can also be formed to meet minimum thickness requirements during a manufacturing process. Furthermore, the alignment of bottom surfaces 34 of key caps 30 and plurality of substantially flat surface portions 46 of FPCB 49 allows each of the plurality of domes 44 to be aligned with a respective one of the plurality of actuators 38 and fully contact the FPCB 49. In this manner, actuation of key caps 30 of the disclosed keypad 20 provides good tactile feel for users of the handheld electronic device 10.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting.

## Claims

1. A keypad (20) for a handheld electronic device (10), comprising:
a dome support (48) having a generally curved top surface (47) including a plurality of substantially flat surface portions (50) and a generally curved bottom surface (51), wherein the substantially flat surface portions are substantially flat relative to the generally curved bottom surface of the dome support;
a flexible printed circuit board (49) attached to the top surface of the dome support and having a plurality of substantially flat surface portions (46) that are associated with the substantially flat surface portions of the top surface of the dome support;
a plurality of domes (44), each of the plurality of domes being disposed on a respective one of the plurality of substantially flat surface portions of the flexible printed circuit board;
a plurality of actuators (38), each of the plurality of actuators being aligned with a respective one of the plurality of domes; and
a plurality of key caps (30), each of the plurality of key caps having a bottom surface (34) that is aligned with a respective one of a plurality of actuators and parallel to a respective one of the plurality of substantially flat surface portions of the flexible printed circuit board.

2. The keypad of claim 1, wherein the bottom surfaces of the plurality of key caps are arranged to conform to the curved shape of the top surface of the dome support.

3. The keypad of claim 1, further comprising a dome sheet and a light guide, wherein the dome sheet and the light guide are located between the plurality of key caps and the dome support and are configured to conform to the generally curved shape of the top surface of the dome support.

4. The keypad of claim 1, wherein the dome support has a convex shape.

5. The keypad of claim 1, further comprising:
a sheet (36) attached to the bottom surface of each of the plurality of key caps, the sheet comprising the plurality of actuators (38), each of the plurality of actuators directing away from the bottom surface of a respective one of the plurality of key caps, wherein each of the plurality of actuators is perpendicular to a respective one of the plurality of domes, and
wherein the bottom surfaces of the plurality of key caps are arranged to conform to the generally curved shape of the top surface of the dome support .

6. The keypad of claim 5, wherein each of the plurality of actuators is perpendicular to the bottom surface of a respective one of the plurality of key caps.

7. The keypad of claim 5, wherein each of the plurality of domes is attached to a respective one of the plurality of substantially flat surface portions of the flexible printed circuit board.

8. The keypad of claim 7, wherein the bottom surfaces of the plurality of key caps are arranged to conform the generally curved shape of the top surface of the dome support.

9. The keypad of claim 5, wherein the plurality of key caps are uniformly spaced.

10. The keypad of claim 5, wherein the thickness of each of the plurality of key caps is uniform along an entire extent of each of the key caps.

11. A handheld electronic device (10) comprising:
a housing (18);
a processor apparatus (14) disposed in the housing, the processor apparatus including a processor (24) and a memory (26);
an output apparatus (16) supported by the housing, the output apparatus structured to receive signal from the processor apparatus and provide output;
an input apparatus (12) supported by the housing, the input apparatus structured to provide input to the processor apparatus, the input apparatus including the keypad (20) of claim 1, the keypad having a curved shape, wherein the bottom surfaces of the plurality of key caps are arranged to define a generally curved shape, and further wherein each of the plurality of key caps has a substantially uniform thickness.

12. The device of claim 11, wherein the keypad further includes a metal sheet (56) configured to provide support to the keypad.

13. The device of claim 12, wherein the metal sheet is configured to snap into the housing.

14. The device of claim 11, wherein the keypad has a generally convex shape so that each of the plurality of key caps are actuable by a user of the handheld electronic device.

## Patentansprüche

1. Eine Tastatur (20) für eine handgehaltene elektronische Vorrichtung (10), die aufweist:
einen Kuppel-Träger (48), der eine im Allgemeinen gebogene obere Oberfläche (47) mit einer Vielzahl von im Wesentlichen flachen Oberflächenteilen (50), und eine im Wesentlichen gebogene untere Oberfläche (51) hat, wobei die im Wesentlichen flachen Oberflächenteile im Wesentlichen flach sind relativ zu der im Allgemeinen gebogenen unteren Oberfläche des Kuppel-Trägers;
eine flexible Leiterplatte (49), die an der oberen Oberfläche des Kuppel-Trägers angebracht ist und eine Vielzahl von im Wesentlichen flachen Oberflächenteilen (46) hat, die mit den im Wesentlichen flachen Oberflächenteilen der oberen Oberfläche des Kuppel-Trägers assoziiert sind;
eine Vielzahl von Kuppeln (44), wobei jede der Vielzahl von Kuppeln auf einem jeweiligen der Vielzahl von im Wesentlichen flachen Oberflächenteilen der flexiblen Leiterplatte angeordnet ist;
eine Vielzahl von Aktuatoren (38), wobei jeder der Vielzahl von Aktuatoren mit einer jeweiligen der Vielzahl von Kuppeln ausgerichtet ist; und
eine Vielzahl von Tastenkappen (30), wobei jede der Vielzahl von Tastenkappen eine untere Oberfläche (34) hat, die mit einem jeweiligen einer Vielzahl von Aktuatoren ausgerichtet ist und parallel zu einem jeweiligen der Vielzahl von im Wesentlichen flachen Oberflächenteilen der flexiblen Leiterplatte ist.

2. Die Tastatur gemäß Anspruch 1, wobei die unteren Oberflächen der Vielzahl von Tastenkappen ausgebildet sind, an die gebogene Form der oberen Oberfläche des Kuppel-Trägers zu passen.

3. Die Tastatur gemäß Anspruch 1, die weiter eine Kuppel-Folie und einen Lichtleiter aufweist, wobei sich die Kuppel-Folie und der Lichtleiter zwischen der Vielzahl von Tastenkappen und dem Kuppel-Träger befinden und konfiguriert sind, an die im Allgemeinen gebogene Form der oberen Oberfläche des Kuppel-Trägers zu passen.

4. Die Tastatur gemäß Anspruch 1, wobei der Kuppel-Träger eine konvexe Form hat.

5. Die Tastatur gemäß Anspruch 1, die weiter aufweist:
eine Folie (36), die an der unteren Oberfläche von jeder der Vielzahl von Tastenkappen angebracht ist, wobei die Folie die Vielzahl von Aktuatoren (38) aufweist, wobei jeder der Vielzahl von Aktuatoren weg von der unteren Oberfläche einer jeweiligen der Vielzahl von Tastenkappen zeigt, wobei jeder der Vielzahl von Aktuatoren senkrecht zu einer jeweiligen der Vielzahl von Kuppeln ist, und
wobei die unteren Oberflächen der Vielzahl von Tastenkappen ausgebildet sind, an die im Allgemeinen gebogene Form der oberen Oberfläche des Kuppel-Trägers zu passen.

6. Die Tastatur gemäß Anspruch 5, wobei jeder der Vielzahl von Aktuatoren senkrecht zu der unteren Oberfläche einer jeweiligen der Vielzahl von Tastenkappen ist.

7. Die Tastatur gemäß Anspruch 5, wobei jede der Vielzahl von Kuppeln an einem jeweiligen der Vielzahl von im Wesentlichen flachen Oberflächenteilen der flexiblen Leiterplatte angebracht ist.

8. Die Tastatur gemäß Anspruch 7, wobei die unteren Oberflächen der Vielzahl von Tastenkappen ausgebildet sind, an die im Allgemeinen gebogene Form der oberen Oberfläche des Kuppel-Trägers zu passen.

9. Die Tastatur gemäß Anspruch 5, wobei die Vielzahl von Tastenkappen gleichmäßig beabstandet sind.

10. Die Tastatur gemäß Anspruch 5, wobei die Dicke von jeder der Vielzahl von Tastenkappen gleichförmig ist entlang eines gesamten Ausmaßes jeder der Tastenkappen.

11. Eine handgehaltene elektronische Vorrichtung (10), die aufweist:
ein Gehäuse (18);
eine Prozessorvorrichtung (14), die in dem Gehäuse angeordnet ist, wobei die Prozessorvorrichtung einen Prozessor (24) und einen Speicher (26) umfasst;
eine Ausgabevorrichtung (16), die durch das Gehäuse getragen wird, wobei die Ausgabevorrichtung strukturiert ist, ein Signal von der Prozessorvorrichtung zu empfangen und eine Ausgabe vorzusehen;
eine Eingabevorrichtung (12), die durch das Gehäuse getragen wird, wobei die Eingabevorrichtung strukturiert ist, eine Eingabe an die Prozessorvorrichtung vorzusehen, wobei die Eingabevorrichtung die Tastatur (20) gemäß Anspruch 1 umfasst, wobei die Tastatur eine gebogene Form hat, wobei die unteren Oberflächen der Vielzahl von Tastenkappen ausgebildet sind, eine im Allgemeinen gebogene Form zu definieren, und wobei weiter jede der Vielzahl von Tastenkappen eine im Wesentlichen gleichförmige Dicke hat.

12. Die Vorrichtung gemäß Anspruch 11, wobei die Tastatur weiter ein Metallblech (56) umfasst, das konfiguriert ist, eine Unterstützung für die Tastatur vorzusehen.

13. Die Vorrichtung gemäß Anspruch 12, wobei das Metallblech konfiguriert ist, in das Gehäuse einzurasten.

14. Die Vorrichtung gemäß Anspruch 11, wobei die Tastatur eine im Allgemeinen konvexe Form hat, so dass jede der Vielzahl von Tastenkappen durch einen Benutzer der handgehaltenen elektronischen Vorrichtung betätigbar ist.

## Revendications

1. Clavier (20) pour dispositif électronique portable (10), comprenant :
un support de dômes (48) comportant une surface supérieure généralement incurvée (47) comprenant une pluralité de parties de surface sensiblement plates (50) et une surface inférieure généralement incurvée (51), les parties de surface sensiblement plates étant sensiblement plates par rapport à la surface inférieure généralement incurvée du support de dômes ;
une carte de circuits imprimés souple (49) fixée à la surface supérieure du support de dômes et comportant une pluralité de parties de surface sensiblement plates (46) qui sont associées aux parties de surface sensiblement plates de la surface supérieure du support de dômes ;
une pluralité de dômes (44), chaque dôme de la pluralité de dômes étant situé sur une partie respective de la pluralité de parties de surface sensiblement plates de la carte de circuits imprimés souple ;
une pluralité d'actionneurs (38), chaque actionneur de la pluralité d'actionneurs étant aligné avec un dôme respectif de la pluralité de dômes ; et
une pluralité de capuchons de touches (30), chaque capuchon de la pluralité de capuchons de touches comportant une surface inférieure (34) qui est alignée avec un actionneur respectif d'une pluralité d'actionneurs et parallèle à une partie respective de la pluralité de parties de surface sensiblement plates de la carte de circuits imprimés souple.

2. Clavier selon la revendication 1, dans lequel les surfaces inférieures de la pluralité de capuchons de touches sont conçues pour épouser la forme incurvée de la surface supérieure du support de dômes.

3. Clavier selon la revendication 1, comprenant, en outre, une feuille de dômes et un guide de lumière, la feuille de dômes et le guide de lumière étant situés entre les capuchons de la pluralité de capuchons de touches et le support de dômes et étant conçus pour épouser la forme généralement incurvée de la surface supérieure du support de dômes.

4. Clavier selon la revendication 1, dans lequel le support de dômes a une forme convexe.

5. Clavier selon la revendication 1, comprenant, en outre :
une feuille (36) fixée à la surface inférieure de chaque capuchon de la pluralité de capuchons de touches, la feuille comprenant la pluralité d'actionneurs (38), chaque actionneur de la pluralité d'actionneurs étant orienté à l'opposé de la surface inférieure d'un capuchon respectif de la pluralité de capuchons de touches, chaque actionneur de la pluralité d'actionneurs étant perpendiculaire à un dôme respectif de la pluralité de dômes, et
les surfaces inférieures des capuchons de la pluralité de capuchons de touches étant conçus pour épouser la forme généralement incurvée de la surface supérieure du support de dômes.

6. Clavier selon la revendication 5, dans lequel chaque actionneur de la pluralité d'actionneurs est perpendiculaire à la surface inférieure d'un capuchon respectif de la pluralité de capuchons de touches.

7. Clavier selon la revendication 5, dans lequel chaque dôme de la pluralité de dômes est fixé à une partie respective de la pluralité de parties de surface sensiblement plates de la carte de circuits imprimés souple.

8. Clavier selon la revendication 7, dans lequel les surfaces inférieures de la pluralité de capuchons de touches sont conçues pour épouser la forme généralement incurvée de la surface supérieure du support de dômes.

9. Clavier selon la revendication 5, dans lequel les capuchons de la pluralité de capuchons de touches sont équidistants.

10. Clavier selon la revendication 5, dans lequel l'épaisseur de chaque capuchon de la pluralité de capuchons de touches est uniforme le long d'une étendue tout entière de chacun des capuchons de touches.

11. Dispositif électronique portable (10) comprenant :
un boîtier (18) ;
un dispositif processeur (14) situé dans le boîtier, le dispositif processeur comprenant un processeur (24) et une mémoire (26) ;
un dispositif de sortie (16) supporté par le boîtier, le dispositif de sortie étant structuré pour recevoir un signal du dispositif processeur et produire une sortie ;
un dispositif d'entrée (12) supporté par le boîtier, le dispositif d'entrée étant structuré pour fournir une entrée au dispositif processeur, le dispositif d'entrée comprenant le clavier (20) de la revendication 1, le clavier ayant une forme incurvée, les surfaces inférieures de la pluralité de capuchons de touches étant conçues pour définir une forme généralement incurvée, et, en outre, chaque capuchon de la pluralité de capuchons de touches ayant une épaisseur sensiblement uniforme.

12. Dispositif selon la revendication 11, dans lequel le clavier comprend, en outre, une feuille de métal (56) conçue pour servir de support au clavier.

13. Dispositif selon la revendication 12, dans lequel la feuille de métal est conçue pour s'emboîter dans le boîtier.

14. Dispositif selon la revendication 11, dans lequel le clavier a une forme généralement convexe de manière que chaque capuchon de la pluralité de capuchons de touches puisse être actionné par un utilisateur du dispositif électronique portable.
